(19) Europäisches Patentamt
European Patent Office
Office européen des brevets

(11) **EP 2 122 403 B1**

(12) **EUROPÄISCHE PATENTSCHRIFT**

(45) Veröffentlichungstag und Bekanntmachung des Hinweises auf die Patenterteilung:
**18.03.2015  Patentblatt 2015/12**

(51) Int Cl.:
***G02B 13/08*** *(2006.01)*  ***G01J 3/02*** *(2006.01)*
***G01J 3/28*** *(2006.01)*

(21) Anmeldenummer: **08706821.9**

(22) Anmeldetag: **29.01.2008**

(86) Internationale Anmeldenummer:
**PCT/DE2008/000154**

(87) Internationale Veröffentlichungsnummer:
**WO 2008/092431 (07.08.2008 Gazette 2008/32)**

(54) **ANASTIGMATISCHES ANAMORPHOTISCHES OBJEKTIV**

ANASTIGMATIC ANAMORPHIC LENS SYSTEM

OBJECTIF ANAMORPHOSEUR ANASTIGMAT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.01.2007  DE 102007005168**

(43) Veröffentlichungstag der Anmeldung:
**25.11.2009  Patentblatt 2009/48**

(73) Patentinhaber: **Binder + Co. AG**
**8200 Gleisdorf (AT)**

(72) Erfinder: **RUTZEN, Frank**
**39104 Magdeburg (DE)**

(74) Vertreter: **KLIMENT & HENHAPEL**
**Patentanwälte OG**
**Singerstrasse 8**
**1010 Wien (AT)**

(56) Entgegenhaltungen:
**DE-A1- 2 347 737   DE-A1- 19 650 724**
**US-A- 5 671 093   US-A1- 2004 196 570**

**Beschreibung**

Stand der Technik

Die Erfindung geht aus von einem anastigmatischen anamorphotischen Objektiv für die Bildverarbeitung, insbesondere von mehrdimensionalen Bildern, wie sie beispielsweise im Zusammenhang mit der ortsaufgelösten Spektroskopie entstehen und ausgewertet werden.

Mit Hilfe eines Anamorphoten können ortsaufgelöste Spektralbilder auf Sensorarrays mit unterschiedlichen lateralen Abbildungsmaßstäben abgebildet werden.

Ein anamorphotisches Linsensystem oder ein "Anamorphot" erzeugt ein "verzerrtes Bild" durch unterschiedliche Abbildungsmaßstäbe in zwei orthogonalen Richtungen. Das Verhältnis dieser beiden Abbildungsmaßstäbe wird als Stauchungs- oder Streckungsverhältnis, anamorphotischer Faktor oder Anamorphotfaktor angegeben.

Anamorphotische Linsen Systeme kommen in der Bildverarbeitung vor allem bei der Aufnahme und Projektion von Filmen und Bildern zur Anwendung. Bei diesen Applikationen soll das psychologische Sehempfinden des Menschen bei der Projektion berücksichtigt oder/und eine effektive Ausnutzung von Filmmaterial bzw. digitalen Datenmedien erreicht werden.

Bei der Konstruktion eines Anamorphoten geht man in der Regel von einem bereits korrigierten rotationssymmetrischen Grundobjektiv aus, das mit einem oder zwei weiteren Objektiven, die jeweils aus einheitlich ausgerichteten zylindrischen Linsen bestehen, kombiniert wird.

So ist z.B. ein kompakter zweiteiliger Anamorphot für die digitale Projektion von elektronisch erzeugten Bildern bekannt (DE 10060072). Die Grundanordnung besteht hierbei aus einem vorgelagerten anamorphotischen Objektiv mit zwei zylindrischen Kittgliedern mit hoher Brechkraft in horizontaler Richtung und einem sphärischen Projektionsobjektiv in der Mitte und einem nach gelagerten Anamorphoten mit einer oder mehreren Zylinderlinsen mit schwacher Brechkraft in vertikaler Richtung und negativer Brennweite.

Eine weitere dreiteilige Anordnung ist z.B. für die Bildaufnahme mit einer Prozesskamera aus der Druckindustrie (US 3871748) bekannt, bei der vor und nach einem rotationssymmetrischen Objektiv jeweils zwei afokale zylindrische Linsensysteme angeordnet sind. In der Literatur sind weitere Kombinationen zwischen sphärischen und zylindrischen Objektiven beschrieben, wobei die zylindrischen und rotationssymmetrischen sphärischen Einheiten unabhängig voneinander korrigiert werden.

Auch die US 5 671 093 A beschreibt eine üblichen Vorgehensweise bei der Auslegung von Anamorphoten, nämlich zwei identische rotationssymmetrische Objektive objekt- und bildseitig anzuordnen und dann eine afokale zylindrische mittlere Baugruppe zu entwerfen.

Die DE 196 50 724 A1 zeigt ein fotografisches Linsensystem mit unterschiedlicher Vertikal- und Horizontalvergrößerung, also ein anamorphotisches Linsensystem, mit aufeinanderfolgenden anamorphotischen Linsen.

In einem Patent (DE 199 11 862 C1) wird von dieser Konstruktionspraxis, insbesondere von einem selbstständig korrigierten Grundobjektiv auszugehen, abgewichen. Hierbei werden "übliche" zylindrische Linsensysteme mit speziellen sphärischen Grundobjektiven kombiniert, die noch solche nicht korrigierten Aberrationen aufweisen, die im Zusammenspiel mit den Aberrationen der zylindrischen Objektive die Bildqualität verbessern.

Weiterhin ist ein anamorphotischer Vorsatz für Aufnahme und Wiedergabezwecke beschrieben (DE 41 04 684 C1), der aus Linsengruppen besteht, die sowohl sphärische als auch zylindrische Oberflächen gemeinsam enthalten.

Ferner ist ein anamorphotischer Konverter bekannt, der für die Konvertierung eines digitalen Filmformates 16 : 9 (1,78 : 1) an das übliche Format 2,35 : 1 mit einem Stauchungs- bzw. Streckungsverhältnis 1,252 : 0,947 (Anamorphotfaktor 1,322) unter weitgehender Vermeidung von Ellipsenbildung geeignet ist (US 6,995,920 B2).

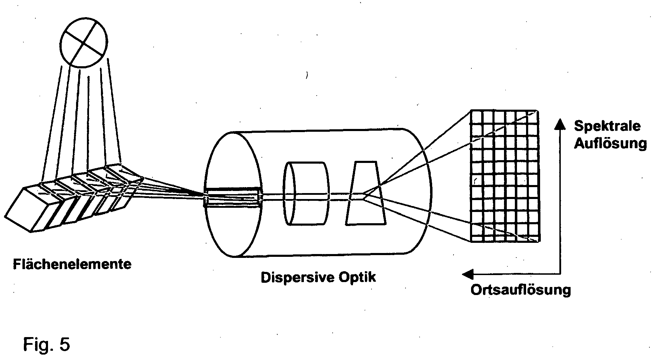

Allen diesen Beispielen und Prinzipien ist gemeinsam, dass die einzelnen Teilsysteme zunächst relativ selbstständig ausgelegt werden und Stauchungs- bzw. Streckungsverhältnisse (Anamorphotfaktor) von 1,3 : 1 (1,3) bis 2 : 1 (2) nicht wesentlich überschritten bzw. bei Konvertierung der Seitenverhältnisse in Gegenrichtung von 1 : 1,3 (0,77) bis 1 : 2 (0,5) nicht wesentlich unterschritten werden. Eine Korrektur von Aberrationen und Astigmatismus wird zwar angestrebt, ist aber durch die relativ separate Betrachtung von Einzelsystemen nur eingeschränkt möglich. Die in ihrer Gesamtheit äußerst hohen Anforderungen, die sich beispielsweise aus der ortsaufgelösten Spektroskopie an das Abbildungsverhalten des Anamorphoten in Verbindung mit einem gut korrigierten Bild ergeben, erlauben es nicht mehr, dem bei der Auslegung solcher Systeme üblichen und dem Stand der Technik entsprechenden Vorgehen zu folgen. Fig. 5 stellt das an sich bekannte Prinzip der ortsaufgelösten Spektroskopie dar. Hier müssen üblicherweise Aufnahmen von in einem Objektbereich befindlichen Flächenelementen (in Fig. 5 links außen) in zweidimensionalen Spektralbildern derart wiedergegeben werden, dass die eine Richtung die Ortsauflösung und orthogonal dazu die zweite Richtung die spektrale Auflösung repräsentiert (Fig. 5 rechts außen). Die einer schnellen Auswertung zweckdienliche Aufbereitung des Bildes erfolgt in einer zwischen den Flächenelementen und einem als Gitter dargestellten Sensorarray angeordneten dispersiven Optik, zu der auch das anamorphotische Objektiv gehört.

Beide Richtungen können in Abhängigkeit von der das Spektralbild erzeugenden Optik deutlich unterschiedliche Abbildungsmaßstäbe besitzen und müssen für die weitere Auswertung, z.B. auf dem Sensorarray mit fester Geometrie, abgebildet werden. Die unterschiedlichen Abbildungsmaßstäbe des Spektralbildes und die Abbildung solcher mehrdimensionalen Spektralbilder auf Sensorarrays, die sich in den beiden Dimensionen Breite und Höhe deutlich unterscheiden, führt zu großen Schwierigkeiten beim Entwurf der entsprechenden, dazu notwendigen anamorphotischen Optik.

Die Erfindung und ihre Vorteile

Das erfindungsgemäße anastigmatische anamorphotische Objektiv mit den Merkmalen des Patentanspruchs 1 hat demgegenüber den Vorteil, dass es hinsichtlich der hohen Anforderungen, die sich aus der ortsaufgelösten Spektroskopie ergeben, ausgelegt ist.

Im Unterschied zu den aus dem Stand der Technik bisher bekannten üblichen Entwurfszielen für Anamorphoten, ergeben sich bezüglich der Abbildungseigenschaften folgende primäre erfindungsgemäße Vorteile:

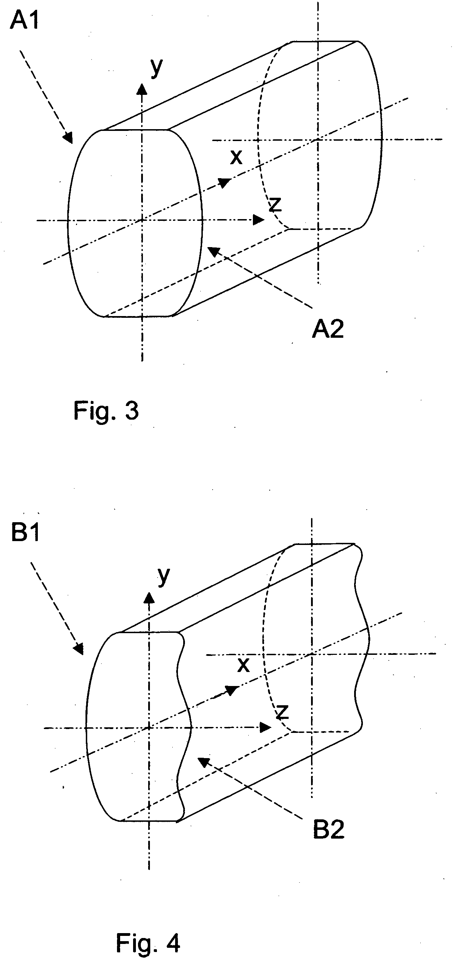

1. Stauchungs- bzw. Streckungsverhältnisse (Anamorphotfaktor) <u>bis zu</u> 8 : 1
2. eine bildseitige Apertur in gestauchter Richtung von > 0,8
3. objektseitige Telezentrie in beiden Azimuten (x/z und y/z Ebene Fig. 3)
4. Achromasie des Anamorphoten über einen großen Wellenlängenbereich (im sichtbaren und/oder InfrarotBereich)
5. Astigmatismus durch Planflächen im Bildbereich
6. im Verhältnis zur Apertur lange Schnittweite
7. gut korrigierte sphärische Aberrationen und Astigmatismus
8. in beiden Azimuten endliche Abbildungsmaßstäbe

Definitionen:

Die im nachfolgenden Text als "verzerrende optische Elemente" benannten und in Fig. 3 des Ausführungsbeispiels dargestellten optischen Bauteile werden üblicherweise auch als Zylinderlinsen und deren optisch wirksame Flächen A1 und A2 als zylindrische Flächen bezeichnet. Im Folgenden werden Flächen, die einen asphärischen Kurvenverlauf in einer Ebene (hier in der y/z Ebene) und wie bei Zylinderlinsen eine Krümmung von Null in einer orthogonalen Ebene dazu besitzen, wie auch mit B2 entsprechend Fig. 4 des Ausführungsbeispiels dargestellt, als asphärisch zylindrische Flächen bezeichnet und optische Elemente nach Fig.4 des Ausführungsbeispiels mit mindestens einer solchen Fläche B2 asphärische Zylinderlinsen genannt.

Wenn im Weiteren von einer torischen Fläche als verzerrendes Element gesprochen wird, ist damit gemeint, dass die Brechkraft des optischen Elementes mit dem Azimut um die optische Achse variiert. Die Bedeutung des Begriffes beschränkt sich dabei nicht auf die übliche Realisierung mit unterschiedlichen Krümmungsradien in orthogonalen Richtungen senkrecht zur optischen Achse (wie z.B. der Zylinderlinse), sondern schließt auch die Nutzung asphärischer Formeln zur Berechnung der Flächenpunkte ein.

Der Aufbau des erfindungsgemäßen anastigmatischen anamorphotischen Objektivs kann wie folgt beschrieben werden:

Es besteht aus einer dreiteiligen Anordnung, wobei zunächst nur optische Bauelemente mit Rotationssymmetrie betrachtet werden. Die anamorphotisch verzerrend wirkenden Elemente werden im ersten Ansatz an den erfindungsgemäßen Positionen als planparallele Flächen, die Materialien mit hoher Brechkraft einschließen, berücksichtigt. Damit wird zunächst ein weitgehend rotationssymmetrisches Grundsystem entworfen.

Für den Erstentwurf sind die objektseitigen und bildseitigen Aperturen sowie die Brenn- und Schnittweiten so zu wählen, dass der gewünschte Abbildungsmaßstab insbesondere in der verzerrenden Ebene theoretisch realisierbar ist und später eine gute Korrektur des Astigmatismus zwischen beiden Azimuten möglich wird.

Zunächst kann relativ einfach die objektseitige positiv brechende sphärische Baugruppe zur Verkleinerung der Feldwinkel/ Aperturen entworfen werden.

Danach wird die mittlere optische Baugruppe so ausgelegt, dass in Richtung der größten Stauchung und damit der größten bildseitigen Apertur später unter Einsatz verzerrender Elemente eine ausreichende Ausweitung des Strahlungskegels realisiert werden kann und dabei die Feldwinkel/ Aperturen in Stauchungsrichtung weiterhin gering bleiben. Die objektseitige sphärische Baugruppe und die mittlere optische Baugruppe werden dann ohne Verzerrung hinsichtlich chromatischer Fehler korrigiert.

Weiterhin wird für die bildseitige optische Baugruppe eine erfindungsgemäße Anordnung gewählt und die vorher festgelegten Brenn- und Schnittweiten für das Gesamtsystem ohne Verzerrung durchgesetzt und das gesamte rotationssymmetrische Grundsystem hinsichtlich sphärischer und chromatischer Aberrationen korrigiert.

Erst danach werden die anamorphotisch verzerrenden Elemente, gewöhnlich Zylinderlinsen, in das bis dahin entstandene rotationssymmetrische Grundsystem an den Stellen der planparallelen Flächen integriert und ihre Radien im Zusammenhang mit der Gesamtkorrektur des System festgelegt. Um dabei die Entwurfsfreiheit zu erhöhen, können erfindungsgemäß asphärische Zylinderlinsen oder andere Bauelemente mit torischen Flächen eingesetzt werden.

Das gesamte System wird abschließend hinsichtlich seiner Aberrationen und insbesondere hinsichtlich des Astigmatismus korrigiert.

Erfindungsgemäß ist das mindestens eine anamorphotisch verzerrende Element der mittleren Baugruppe in mindestens einer Richtung negativ brechend, und innerhalb der mittleren Baugruppe ist dem mindestens einen anamorphotisch verzerrenden Element mindestens ein Triplet aus rotationssymmetrischen Linsen nachgeordnet. Dadurch wird eine ausreichende Strahlungsaufweitung in mindestens einer Richtung unter Beibehaltung kleiner Feldwinkel erreicht, die später eine ausreichende Stauchung des Bildes mit ausreichender Korrektur des Astigmatismus zulässt.

Nach einer diesbezüglich vorteilhaften Ausgestaltung der Erfindung ist das Triplet etwa in der Mitte des Gesamtsystems angeordnet. Durch diese Anordnung des Triplets und aufgrund seiner Rotationssymmetrie in beiden Azimuten werden die Optimierungsmöglichkeiten hinsichtlich chromatischer Fehler und sphärischer Aberrationen verbessert.

Nach einer zusätzlichen vorteilhaften Ausgestaltung der Erfindung bestehen die anamorphotisch verzerrenden Elemente aus Materialien mit hoher Brechkraft n, wobei n > 1,7 ist. Dadurch wird im Zusammenhang mit der Anordnung der verzerrenden Elemente eine ausreichend hohe Strahlenaufweitung und Stauchung zur Realisierung großer bildseitiger Aperturen erreicht.

Nach einer anderweitigen vorteilhaften Ausgestaltung der Erfindung besteht mindestens eines der anamorphotisch verzerrenden Elemente der mittleren optischen Baugruppe und der bildseitigen optischen Baugruppe aus mindestens einer Zylinderlinse, deren beide torische Flächen in orthogonalen Richtungen senkrecht zur optischen Achse (z) stehen und nach Gl. 1

$$z = \frac{C * y^2}{1 + \sqrt{(1 - C^2 y^2)}} \qquad \text{Gl.1}$$

mit C = Krümmung
y = Oberflächenkoordinate
z = Koordinate in Richtung optischer Achse

berechnet werden. Die Verwendung von so ausgelegten Zylinderlinsen hat den Vorteil, dass diese Elemente relativ leicht und kostengünstig herstellbar sind.

Nach einer anderweitigen vorteilhaften Ausgestaltung der Erfindung besteht mindestens eines der anamorphotisch verzerrenden Elemente in der mittleren optischen Baugruppe und in der bildseitigen optischen Baugruppe aus mindestens einer asphärischen Zylinderlinse, d. h. mindestens eine der beiden torischen Flächen steht in orthogonalen Richtungen (x, y) senkrecht zur optischen Achse (z) und wird nach Flächenformeln für Asphären berechnet. Die Verwendung von so ausgelegten Zylinderlinsen ermöglicht die Erzielung hoher bildseitiger Aperturen unter ausgezeichneten Korrekturmöglichkeiten der Aberrationen und des Astigmatismus.

Nach einer diesbezüglichen vorteilhaften Ausgestaltung der Erfindung berechnet sich die mindestens eine torische Fläche nach der Flächenformel

$$z = \frac{C * y^2}{1 + \sqrt{(1 - (K+1) C^2 y^2)}} + A_1 * y^4 + A_2 * y^6 + A_3 * y^8 + A_4 * y^{10} + A_5 * y^{12} + A_6 * y^{14} + A_7 * y^{16} + A_8 * y^{18} \qquad \text{Gl.2}$$

mit C = Krümmung
y = Oberflächenkoordinate
z = Koordinate in Richtung optischer Achse
An = asphärische Koeffizienten
K = konische Konstante

Der Einsatz von Bauelementen mit solchen Flächen ermöglicht die Erzielung hoher bildseitiger Aperturen unter ausgezeichneten Korrekturmöglichkeiten der Aberrationen und des Astigmatismus. Weiterhin sind diese Flächen mit einer Krümmung von 0 in x-Richtung (asphärische Zylinderlinsen) noch gut herstellbar.

Nach einer anderweitigen vorteilhaften Ausgestaltung der Erfindung ist mindestens eine der rotationssymmetrischen Linsen in den optischen Baugruppen asphärisch. Das hat den Vorteil, dass man innerhalb der erfindungsgemäßen Grundanordnung, auch mit rotationssymmetrischen Asphären verbesserte Korrekturmöglichkeiten für die Aberrationen und den Astigmatismus erhält.

Nach einer zusätzlichen vorteilhaften Ausgestaltung der Erfindung bestehen alle verzerrenden Elemente aus asphärischen Zylinderlinsen. Dadurch werden die Freiheitsgrade der Anordnung für die Realisierung eines sehr hohen Anamorphotfaktors mit ausgezeichneter Korrektur der Aberrationen und des Astigmatismus deutlich erhöht.

Nach einer anderweitigen vorteilhaften Ausgestaltung der Erfindung besteht die positiv brechende Baugruppe aus zwei positiven sphärischen Linsen, die mittlere optische Baugruppe aus einer in einer Richtung negativ brechenden asphärischen Zylinderlinse und einem positiven sphärischen Triplet und die bildseitige optische Baugruppe in Reihenfolge aus zwei positiven sphärischen Linsen, einer asphärischen Zylinderlinse, zwei positiven sphärischen Linsen und einer asphärischen Zylinderlinse. Diese Kombination hat den Vorteil, dass dadurch die erfindungsgemäßen Entwurfsziele in einer sehr kompakten Anordnung erreicht werden können.

Ein detailliert ausgelegtes erfindungsgemäßes anastigmatisches anamorphotisches Objektiv besitzt folgende Parameter:

| Flächen-Nr. | Radien | Abstände | Brechzahlen | Bemerkung |
|---|---|---|---|---|
| 1 | -333,30 | 2,75 | 1,595 | |
| 2 | -37,82 | 1,00 | Luft | |
| 3 | 58,15 | 2,46 | 1,755 | |
| 4 | 132,20 | 8,06 | Luft | |
| 5 | 0,00 | 1,50 | 1,850 | * zylindrische Fläche |
| 6 | 25,48 | 23,31 | Luft | ** aspärische zylindrische Fläche |
| 7 | 23,50 | 6,75 | 1,595 | |
| 8 | -27,48 | 0,00 | Luft | |
| 9 | -27,48 | 1,40 | 1,850 | |
| 10 | 22,45 | 4,23 | Luft | |
| 11 | 34,80 | 6,50 | 1,595 | |
| 12 | -32,70 | 42,14 | Luft | |
| 13 | 18,79 | 5,50 | 1,595 | |
| 14 | 15,28 | 2,12 | Luft | |
| 15 | 23,75 | 5,64 | 1,850 | |
| 16 | 48,24 | 1,00 | Luft | |
| 17 | 20,77 | 3,80 | 1,850 | ** aspärische zylindrische Fläche |
| 18 | 61,70 | 1,20 | Luft | * zylindrische Fläche |
| 19 | 27,46 | 1,50 | 1,850 | |
| 20 | 15,50 | 0,00 | Luft | |
| 21 | 15,50 | 2,50 | 1,595 | |
| 22 | 100,00 | 0,35 | Luft | ** aspärische zylindrische Fläche |
| 23 | 7,06 | 3,00 | 1,850 | * zylindrische Fläche |
| 24 | 27,21 | | | |

| Flächen-Nr. | K | A1 | A2 | A3 | A4 | A5 | A6 | A7 | A8 |
|---|---|---|---|---|---|---|---|---|---|
| 6 | 1,94E+00 | 3,00E-05 | -7,40E-07 | -2,24E-07 | 5,45E-09 | 0,00E+00 | 0,00E+00 | 0,00E+00 | 0,00E+00 |
| 17 | 7,93E-01 | 6,13E-05 | -3,03E-06 | -4,47E-08 | 6,03E-10 | 0,00E+00 | 0,00E+00 | 0,00E+00 | 0,00E+00 |
| 23 | -2,57E-01 | -1,12E-03 | 1,05E-04 | -2,26E-06 | 2,06E-08 | 0,00E+00 | 0,00E+00 | 0,00E+00 | 0,00E+00 |

Hier hat sich gezeigt, dass ein Stauchungsverhältnis (Anamorphotfaktor) von 8,25 : 1 (8,25) bei einer bildseitigen Apertur in gestauchter Richtung von > 0,84 erreicht werden kann. Die objektseitige Telezentrie in beiden Azimuten ist zugelassen und der Anamorphot besitzt weitgehende Achromasie in einem großen Wellenlängenbereich im Infrarotbereich. Der Astigmatismus konnte durch eine plane Sensorfläche im Bildbereich im Verhältnis zur Apertur bei langer Schnittweite korrigiert werden. Die sphärischen Aberrationen und der Astigmatismus sind bei endlichen Abbildungsmaßstäben in beiden Azimuten gut korrigiert.

Weitere Vorteile und vorteilhafte Ausgestaltungen der Erfindung sind der nachfolgenden Beispielbeschreibung, der Zeichnung und den Ansprüchen entnehmbar.

Zeichnung

Ein Ausführungsbeispiel der Erfindung ist in den Zeichnungen dargestellt und im Folgenden näher beschrieben. In den Zeichnungen zeigen

Fig. 1    eine mögliche Anordnung optischer Bauelemente zur Realisierung des erfindungsgemäßen anastigmatischen anamorphotischen Objektivs,

Fig. 2    die Ansicht auf dieses Objektiv aus einer 90° zur Ansicht von Fig. 1 gelegenen Blickrichtung,

Fig. 3    eine Zylinderlinse mit zylindrischen Flächen,

Fig. 4    eine Zylinderlinse mit asphärischen Flächen und

Fig. 5    ein den Stand der Technik darstellendes Schema der ortsaufgelösten Spektroskopie.

Die Tabellen 1 und 2 geben Konstruktionswerte und Brechzahlen für eine ausgewählte Ausführung eines erfindungsgemäßen anastigmatischen anamorphotischen Objektivs an.

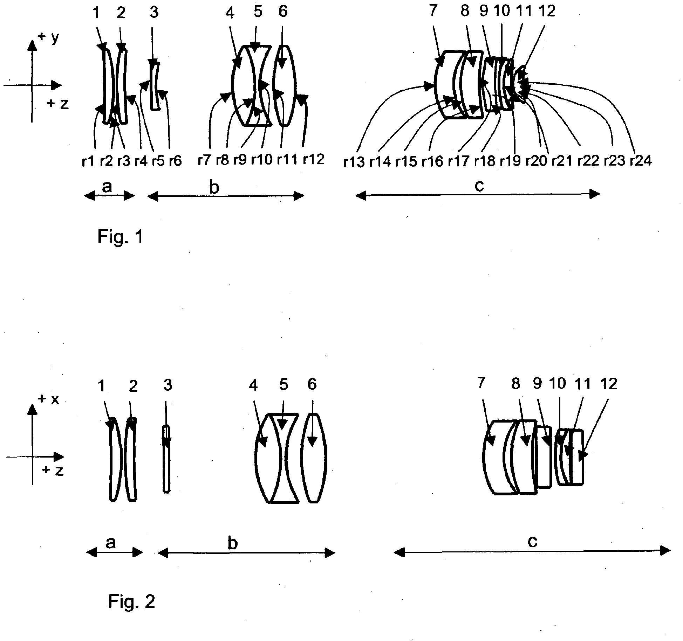

Wie aus den Fig. 1 und 2 erkennbar, besteht das erfindungsgemäße anastigmatische anamorphotische Objektiv im vorliegenden Beispiel aus drei Linsenbaugruppen, nämlich einer objektseitigen optischen Bausgruppe a, einer mittleren optischen Baugruppe b und einer bildseitigen optischen Baugruppe c. Die objektseitige optische Bausgruppe a wird durch ausschließlich rotationssymmetrische Linsen 1 und 2 mit den in Tabelle 1 aufgeführten Radien $r_1$ und $r_2$ bzw. $r_3$ und $r_4$ gebildet. Demzufolge handelt es sich um eine sphärische Baugruppe, die positiv brechend wirkt. Sie dient zur Verkleinerung der Feldwinkel.

Die zur Realisierung der Verzerrung eingesetzten optischen Elemente wirken in ihren primären Abbildungseigenschaften im Azimut der kurze Seite (y/z -Ebene). Im Azimut der langen Seite (x/z-Ebene) wirken sie vornehmlich auf den Astigmatismus.

Üblicherweise werden als verzerrende optische Elemente Zylinderlinsen nach Fig. 3 mit optisch wirksamen zylindrischen Flächen A1 und A2 eingesetzt. Im vorliegenden Beispiel dagegen werden optische Elemente nach Fig. 4 mit mindestens einer asphärischen Fläche B2, so genannte asphärische Zylinderlinsen, eingesetzt.

In der mittleren optischen Baugruppe b ist ein anamorphotisch verzerrendes Element (3) angeordnet, das zerstreuend arbeitet und in Verbindung mit einem aus rotationssymmetrischen Linsen 4, 5 und 6 bestehenden Triplet die Strahlenaufweitung in Stauchungsrichtung realisiert. Das Triplet verbessert aufgrund seiner Rotationssymmetrie in beiden Azimuten und der Anordnung in der Mitte des Objektivs die Optimierungsmöglichkeiten hinsichtlich chromatischer Fehler und sphärischer Aberrationen.

In der bildseitigen optischen Baugruppe c sind zwei anamorphotisch verzerrende optische Elemente 9 und 12 im Wechsel mit positiven sphärischen Linsen 7, 8 und 10, 11 angeordnet. Durch sie wird die hohe Apertur von mindestens 0,8 im Azimut der kurzen Seite (y/z-Ebene) erzielt.

Für die anamorphotisch verzerrenden Elemente 3, 9 und 12 werden hoch brechende Gläser eingesetzt. Die damit verbundenen hohen Dispersionen und ihre Wirkung auf die chromatischen Fehler werden mittels der mit ihnen kombinierten Linsen durch entsprechend gewählte Brechkräfte, Abstände und Gläser kompensiert.

Als anamorphotisch verzerrend wirkende optische Elemente werden üblicherweise und dem Stand der Technik entsprechend Zylinderlinsen, wie in Fig. 3 gezeigt, eingesetzt. Als optisch wirksame Flächen weisen sie zylindrische Flächen A1 und A2 auf.

Wie aus Fig. 4 erkennbar, sind im vorliegenden Beispiel bei jedem anamorphotisch verzerrenden Element 3, 9, 12 die Zylinderflächen jeweils durch eine torische Fläche B1 bzw. B2 ersetzt. Torische Flächen sind asphärische Flächen ohne Rotationssymmetrie um die Achse orthogonal zum Schnitt. In ihnen wirken die primären Abbildungseigenschaften der anamorphotisch verzerrenden Elemente 3, 9, 12. Dies kann sowohl eine weniger gekrümmte Fläche sein, vorzugsweise ist aber eine Fläche mit einer stärkeren Krümmung zu wählen. Um die Symmetrie in den orthogonal aufeinander stehenden Hauptschnitten zu wahren, schneiden die jeweiligen Elementachsen y und z die mit x gekennzeichnete optische Achse des Systems.

Bezugszahlenliste

A1  Zylindrische Fläche
A2  Zylindrische Fläche
B1  torische Fläche
B2  torische Fläche
    a objektseitige optische Baugruppe
    b mittlere optische Baugruppe
    c bildseitige optische Baugruppe
    $r_n$ Linsenradien
    x x-Achse
    y y- Achse
    z z- Achse
    1, 2 rotationssymmetrische Linse
    3 anamorphotisch verzerrendes Element
    4, 5 , 6 rotationssymmetrische Linse
    7, 8 positive sphärische Linse
    9 anamorphotisch verzerrendes Element
    10, 11 positive sphärische Linse
    12 anamorphotisch verzerrendes Element

In den Gleichungen 1 und 2 bedeuten:

z     Koordinate in Richtung der optischen Achse
C     Krümmung
y     Oberflächenkoordinate
An    asphärischer Koeffizient
K     konische Konstante

**Patentansprüche**

1.  Anastigmatisches anamorphotisches Objektiv für die Bildverarbeitung, insbesondere von mehrdimensionalen Bildern in der ortsaufgelösten Spektroskopie

        - mit einem hohen Anamorphotfaktor, d. h. einem Anamorphotfaktor größer 3,0,
        - mit mehreren Linsenbaugruppen,
        - wobei objektseitig eine positiv brechende Baugruppe (a) mit mindestens einer rotationssymmetrischen Linse (1, 2) oder Linsengruppe zur Verkleinerung der Feldwinkel angeordnet ist,
        - wobei im Strahlengang hinter der positiv brechenden Baugruppe (a) eine mittlere optische Baugruppe (b) zur Strahlenaufweitung in einer oder mehreren zur optischen Achse senkrechten Richtung unter Beibehaltung kleiner Feldwinkel angeordnet ist,
        - wobei die mittlere optische Baugruppe (b) mindestens ein anamorphotisch verzerrendes Element (3) und ein oder mehrere rotationssymmetrische Linsen (4, 5, 6) oder Linsengruppen enthält, und
        - wobei bildseitig eine zusätzliche optische Baugruppe (c) zur Stauchung und zur Vergrößerung der Apertur in den Achsen mit Strahlenaufweitung angeordnet ist,
        - wobei diese bildseitige optische Baugruppe (c) abwechselnd mindestens ein anamorphotisch verzerrendes Element (9, 12) und mindestens eine rotationssymmetrische Linse (7, 8, 10, 11) oder Linsengruppe aufweist,
        - wobei das mindestens eine anamorphotisch verzerrende Element (3) der mittleren optischen Baugruppe (b) in mindestens einer Richtung negativ brechend ist und
        - wobei innerhalb der mittleren optischen Baugruppe (b) dem mindestens einen anamorphotisch verzerrenden Element (3) mindestens ein Triplet aus rotationssymmetrischen Linsen (4, 5, 6) nachgeordnet ist.

2.  Anastigmatisches anamorphotisches Objektiv nach Anspruch 1, **dadurch gekennzeichnet, dass** das Triplet etwa in der Mitte des Objektivs angeordnet ist.

3. Anastigmatisches anamorphotisches Objektiv nach Anspruch 1, **dadurch gekennzeichnet, dass** die anamorphotisch verzerrenden Elemente (3, 9, 12) aus Materialien mit hoher Brechkraft n, d. h. n > 1, 7, bestehen.

4. Anastigmatisches anamorphotisches Objektiv nach einem der Ansprüche 1 bis 3, **dadurch gekennzeichnet, dass** mindestens eines der anamorphotisch verzerrenden Elemente (3, 9, 12) der mittleren optischen Baugruppe (b) und der bildseitigen optischen Baugruppe (c) aus mindestens einer Zylinderlinse besteht, deren beide torische Flächen (A1, A2) in orthogonalen Richtungen (x, y) senkrecht zur optischen Achse (z) stehen und nach Gl.1

$$z = \frac{C * y^2}{1 + \sqrt{(1 - C^2 y^2)}} \qquad \text{Gl.1}$$

mit

C = Krümmung
y = Oberflächenkoordinate
z = Koordinate in Richtung optischer Achse

berechnet werden.

5. Anastigmatisches anamorphotisches Objektiv nach einem der Ansprüche 1 bis 3, **dadurch gekennzeichnet, dass** mindestens eines der anamorphotisch verzerrenden Elemente (3, 9, 12) in der mittleren optischen Baugruppe (b) und in der bildseitigen optischen Baugruppe (c) aus mindestens einer asphärischen Zylinderlinse besteht, d. h. mindestens eine der beiden torischen Flächen (B1, B2) in orthogonalen Richtungen (x, y) senkrecht zur optischen Achse (z) steht und nach Flächenformeln für Asphären berechnet wird.

6. Anastigmatisches anamorphotisches Objektiv nach Anspruch 5, **dadurch gekennzeichnet, dass** die Berechnung der mindestens einen torischen Fläche (B1, B2) nach der Flächenformel

$$z = \frac{C * y^2}{1 + \sqrt{(1 - (K+1) C^2 y^2)}} + A_1 * y^4 + A_2 * y^6 + A_3 * y^8 + A_4 * y^{10} + A_5 * y^{12} + A_6 * y^{14} + A_7 * y^{16} + A_8 * y^{18} \qquad \text{Gl.2}$$

mit

C = Krümmung
y = Oberflächenkoordinate
z = Koordinate in Richtung optischer Achse
An = asphärische Koeffizienten
K = konische Konstante

erfolgt.

7. Anastigmatisches anamorphotisches Objektiv nach einem der Ansprüche 1 bis 5, **dadurch gekennzeichnet, dass** mindestens eine der rotationssymmetrischen Linsen in den optischen Baugruppen (a, b, c) asphärisch ist.

8. Anastigmatisches anamorphotisches Objektiv nach einem der Ansprüche 1 bis 6, **dadurch gekennzeichnet, dass** alle verzerrenden Elemente (3, 9, 12) asphärische Zylinderlinsen sind.

9. Anastigmatisches anamorphotisches Objektiv nach einem der Ansprüche 1 bis 3 oder 8, **dadurch gekennzeichnet, dass** die positiv brechende Baugruppe (a) aus zwei positiven sphärischen Linsen (1, 2), die mittlere optische Baugruppe (b) aus einer in einer Richtung negativ brechenden asphärischen Zylinderlinse (3) und einem positiven sphärischen Triplet und

die bildseitige optische Baugruppe (c) in Reihenfolge aus zwei positiven sphärischen Linsen (7, 8), einer asphärischen Zylinderlinse (9), zwei positiven sphärischen Linsen (10, 11) und einer asphärischen Zylinderlinse (12) besteht.

10. Anastigmatisches anamorphotisches Objektiv nach einem der Ansprüche 1 bis 9,
**dadurch gekennzeichnet,**
**dass** das Objektiv folgende Parameter besitzt:

| Flächen-Nr. | Radien | Abstände | Brechzahlen | Bemerkung |
|---|---|---|---|---|
| 1 | -333,30 | 2,75 | 1,595 | |
| 2 | -37,82 | 1,00 | Luft | |
| 3 | 58,15 | 2,46 | 1,755 | |
| 4 | 132,20 | 8,06 | Luft | |
| 5 | 0,00 | 1,50 | 1,850 | * zylindrische Fläche |
| 6 | 25,48 | 23,31 | Luft | ** aspärische zylindrische Fläche |
| 7 | 23,50 | 6,75 | 1,595 | |
| 8 | -27,48 | 0,00 | Luft | |
| 9 | -27,48 | 1,40 | 1,850 | |
| 10 | 22,45 | 4,23 | Luft | |
| 11 | 34,80 | 6,50 | 1,595 | |
| 12 | -32,70 | 42,14 | Luft | |
| 13 | 18,79 | 5,50 | 1,595 | |
| 14 | 15,28 | 2,12 | Luft | |
| 15 | 23,75 | 5,64 | 1,850 | |
| 16 | 48,24 | 1,00 | Luft | |
| 17 | 20,77 | 3,80 | 1,850 | ** aspärische zylindrische Fläche |
| 18 | 61,70 | 1,20 | Luft | * zylindrische Fläche |
| 19 | 27,46 | 1,50 | 1,850 | |
| 20 | 15,50 | 0,00 | Luft | |
| 21 | 15,50 | 2,50 | 1,595 | |
| 22 | 100,00 | 0,35 | Luft | ** aspärische zylindrische Fläche |
| 23 | 7,06 | 3,00 | 1,850 | *zylindrische Fläche |
| 24 | 27,21 | | | |

| Flächen-Nr. | K | A1 | A2 | A3 | A4 | A5 | A6 | A7 | A8 |
|---|---|---|---|---|---|---|---|---|---|
| 6 | 1,94E+00 | 3,00E-05 | -7,40E-07 | -2,24E-07 | 5,45E-09 | 0,00E+00 | 0,00E+00 | 0,00E+00 | 0,00E+00 |
| 17 | 7,93E-01 | 6,13E-05 | -3,03E-06 | -4,47E-08 | 6,03E-10 | 0,00E+00 | 0,00E+00 | 0,00E+00 | 0,00E+00 |
| 23 | -2,57E-01 | -1,12E-03 | 1,05E-04 | -2,26E-06 | 2.06E-08 | 0,00E+00 | 0,00E+00 | 0,00E+00 | 0,00E+00 |

**Claims**

1. An anastigmatic anamorphic lens unit for processing images, particularly multidimensional images, in spatially resolved spectroscopy,

   - having a high anamorphic factor, which is an anamorphic factor greater than 3.0,
   - comprising several lens subassemblies,
   - wherein a positive refractive subassembly (a), comprising at least one rotationally symmetrical lens (1, 2) or lens group, is disposed on the lens side in order to reduce the field angles,
   - a central optical subassembly (b) being disposed behind the positive refractive subassembly (a) in the beam path for beam divergence in one or more directions perpendicular to the optical axis, while maintaining small field angles,
   - wherein the central optical subassembly (b) comprises at least one anamorphically distorting element (3) and one or more rotationally symmetrical lens(4, 5, 6) or lens groups, and
   - an additional optical subassembly (c) being disposed on the image side for narrowing and for enlarging the aperture on the axis in which the beam is diverged,
   - wherein the optical subassembly (c) on the image side alternately comprises at least one anamorphically distorting element (9, 12) and at least one rotationally symmetrical lens (7, 8, 10, 11) or lens group,
   - wherein at least one anamorphically distorting element (3) of the central optical subassembly (b) is negative refractive in at least one direction, and
   - at least one triplet of rotationally symmetrical lenses (4, 5, 6) is disposed after the at least one anamorphically distorting element within the central subassembly (b).

2. The anastigmatic anamorphic lens unit according to claim 1, wherein the triplet is disposed approximately at the center of the lens unit.

3. The anastigmatic anamorphic lens unit according to claim 1, wherein the anamorphically distorting elements (3, 9, 12) comprise materials having a high refractive power n, which is to say n>1.7.

4. An anastigmatic anamorphic lens unit according to any one of claims 1 to 3, wherein at least one of the anamorphically distorting elements (3, 9, 12) of the central optical subassembly (b) and of the optical subassembly (c) on the image side comprises at least one cylindrical lens, the two toric surfaces (A1, A2) of which are disposed in orthogonal directions (x, y) perpendicular to the optical axis (z) and are calculated according to Equation 1

$$z = \frac{C \times y^2}{1 + \sqrt{(1 - C^2 y^2)}}$$

   Equ. 1

   with

   C=curvature
   y=surface coordinate
   z=coordinate in the direction of the optical axis.

5. An anastigmatic anamorphic lens unit according to any one of claims 1 to 3, wherein at least one of the anamorphically distorting elements (3, 9, 12) of the central optical subassembly (b) and of the optical subassembly (c) on the image side comprises at least one aspherical cylindrical lens, which is to say at least one of the two toric surfaces (B1, B2) is disposed in orthogonal directions (x, y) perpendicular to the optical axis (z) and is calculated according to surface formulas for aspheres.

6. The anastigmatic anamorphic lens unit according to claim 5, wherein the calculation of the at least one toric surface (B1, B2) is carried out according to the surface formula

$$z = \frac{C \times y^2}{1 + \sqrt{(1 - (K+1)\,C^2 y^2)}} + A_1 \times y^4 + A_2 \times y^6 + A_3 \times y^8 + A_4 \times y^{10} + A_5 \times y^{12} + A_6 \times y^{14} + A_7 \times y^{16} + A_8 \times y^{18}$$

Equ. 2

with

C=curvature
y=surface coordinate
z=coordinate in the direction of the optical axis
An=aspherical coefficient
K=conic constant.

7. An anastigmatic anamorphic lens unit according to any one of claims 1 to 5, wherein at least one of the rotationally symmetrical lenses in the optical subassemblies (a, b, c) is aspherical.

8. An anastigmatic anamorphic lens unit according to any one of claims 1 to 6, wherein all the distorting elements (3, 9, 12) are aspherical cylindrical lenses.

9. An anastigmatic anamorphic lens unit according to any one of claims 1 to 3 or 8, wherein the positive refractive subassembly (a) comprises two positive spherical lenses (1, 2), the central optical subassembly (b) comprises a negative refractive aspherical cylindrical lens (3) in one direction and a positive spherical triplet, and the optical subassembly (c) on the image side comprises two positive spherical lenses (7, 8), an aspherical cylindrical lens (9), two positive spherical lenses (10, 11), and an aspherical cylindrical lens (12), in this sequence.

10. An anastigmatic anamorphic lens unit according to any one of claims 1 to 9, wherein the lens unit has the following parameters:

| Surface No. | Radii | Distances | Refractive indexes | Remarks |
|---|---|---|---|---|
| 1 | -333,30 | 2,75 | 1,595 | |
| 2 | -37,82 | 1,00 | air | |
| 3 | 58,15 | 2,46 | 1,755 | |
| 4 | 132,20 | 8,06 | air | |
| 5 | 0,00 | 1,50 | 1,850 | * cylindrical surface |
| 6 | 25,48 | 23,31 | air | ** aspherical cylindrical surface |
| 7 | 23,50 | 6,75 | 1,595 | |
| 8 | -27,48 | 0,00 | air | |
| 9 | -27,48 | 1,40 | 1,850 | |
| 10 | 22,45 | 4,23 | air | |
| 11 | 34,80 | 6,50 | 1,595 | |
| 12 | -32,70 | 42,14 | air | |
| 13 | 18,79 | 5,50 | 1,595 | |
| 14 | 15,28 | 2,12 | air | |
| 15 | 23,75 | 5,64 | 1,850 | |
| 16 | 48,24 | 1,00 | air | |
| 17 | 20,77 | 3,80 | 1,850 | ** aspherical cylindrical surface |
| 18 | 61,70 | 1,20 | air | * cylindrical surface |
| 19 | 27,46 | 1,50 | 1,850 | |
| 20 | 15,50 | 0,00 | air | |
| 21 | 15,50 | 2,50 | 1,595 | |
| 22 | 100,00 | 0,35 | air | ** aspherical cylindrical surface |
| 23 | 7,06 | 3,00 | 1,850 | * cylindrical surface |

(continued)

| Surface No. | Radii | Distances | Refractive indexes | Remarks |
|---|---|---|---|---|
| 24 | 27,21 | | | |

| Surface No. | K | A1 | A2 | A3 | A4 | A5 | A6 | A7 | A8 |
|---|---|---|---|---|---|---|---|---|---|
| 6 | 1,94E+00 | 3,00 E-05 | -7,40E-07 | -2,24E-07 | 5,45E-09 | 0,00E+00 | 0,00E+00 | 0,00E+00 | 0,00E+00 |
| 17 | 7,93E-01 | 6,13E-05 | -3,03E-06 | -4,47E-08 | 6,03E-10 | 0,00E+00 | 0,00E+00 | 0,00E+00 | 0,00E+00 |
| 23 | -2,57E-01 | -1,12E-03 | 1,05E-04 | -2,26E-06 | 2,06E-08 | 0,00E+00 | 0,00E+00 | 0,00E+00 | 0,00E+00 |

**Revendications**

1. Objectif anamorphique anastigmate pour le traitement d'images, en particulier d'images multidimensionnelles en spectroscopie résolue spatialement,

- avec un facteur d'anamorphose élevé, c'est-à-dire un facteur d'anamorphose supérieur à 3,0,
- avec plusieurs sous-ensembles de lentilles,
- dans lequel un sous-ensemble à réfraction positive (a) avec au moins une lentille (1, 2) ou un groupe de lentilles symétrique par rapport à l'axe de rotation est disposé du côté de l'objet pour réduire les angles de champ,
- dans lequel un sous-ensemble optique intermédiaire (b) est disposé dans le trajet du faisceau en aval du sous-ensemble à réfraction optique (a) pour élargir le faisceau dans une ou plusieurs directions perpendiculaires à l'axe optique en maintenant de petits angles de champ,
- dans lequel le sous-ensemble optique intermédiaire (b) contient au moins un élément déformant anamorphique (3) et une ou plusieurs lentilles (4, 5, 6) ou groupes de lentilles symétriques par rapport à l'axe de rotation, et
- dans lequel un sous-ensemble optique supplémentaire (c) est disposé du côté de l'image en vue de la compression et de l'agrandissement de l'ouverture sur les axes où le faisceau est élargi,
- ce sous-ensemble optique du côté de l'image (c) présentant alternativement un élément déformant anamorphique (9, 12) et au moins une lentille (7, 8, 10, 11) ou un groupe de lentilles symétrique par rapport à l'axe de rotation,
- dans lequel l'au moins un élément déformant anamorphique (3) du sous-ensemble optique intermédiaire (b) a une réfraction négative dans au moins une direction et
- dans lequel, à l'intérieur du sous-ensemble optique intermédiaire (b), au moins un triplet de lentilles symétriques par rapport à l'axe de rotation (4, 5, 6) est disposé en aval d'un élément déformant anamorphique (3).

2. Objectif anamorphique anastigmate selon la revendication 1, **caractérisé en ce que** le triplet est disposé à peu près au milieu de l'objectif.

3. Objectif anamorphique anastigmate selon la revendication 1, **caractérisé en ce que** les éléments déformants anamorphiques (3, 9, 12) sont faits de matériaux ayant un fort pouvoir réfringent n, c'est-à-dire n > 1,7.

4. Objectif anamorphique anastigmate selon l'une des revendications 1 à 3, **caractérisé en ce qu'**au moins un des éléments déformants anamorphiques (3, 9, 12) du sous-ensemble optique intermédiaire (b) et du sous-ensemble optique du côté de l'image (c) se compose d'au moins une lentille cylindrique dont les deux surfaces toriques (A1, A2) sont orientées dans des directions orthogonales (x, y) perpendiculairement à l'axe optique (z) et se calculent selon l'équation 1

$$z = \frac{C \times y^2}{1 + \sqrt{(1 - C^2 y^2)}}$$

éq. 1

où

C = courbure
y = coordonnée de la surface
z = coordonnée dans la direction de l'axe optique.

5. Objectif anamorphique anastigmate selon l'une des revendications 1 à 3, **caractérisé en ce qu'**au moins un des éléments déformants anamorphiques (3, 9, 12) du sous-ensemble optique intermédiaire (b) et du sous-ensemble optique du côté de l'image (c) se compose d'au moins une lentille cylindrique asphérique, c'est-à-dire qu'au moins une des deux surfaces toriques (B1, B2) est orientée dans des directions orthogonales (x, y) perpendiculairement à l'axe optique (z) et se calcule selon les formules de surface des lentilles asphériques.

6. Objectif anamorphique anastigmate selon la revendication 5, **caractérisé en ce que** l'au moins une surface torique (B1, B2) est calculée selon la formule de surface

$$z = \frac{C \times y^2}{1 + \sqrt{(1 - (K+1)C^2 y^2)}} + A_1 \times y^4 + A_2 \times y^6 + A_3 \times y^8 + A_4 \times y^{10} + A_5 \times y^{12} + A_6 \times y^{14} + A_7 \times y^{16} + A_8 \times y^{18} \qquad \text{éq. 2}$$

où

C = courbure
y = coordonnée de la surface
z = coordonnée dans la direction de l'axe optique.
An = coefficient asphérique
K = constante conique.

7. Objectif anamorphique anastigmate selon l'une des revendications 1 à 5, **caractérisé en ce qu'**au moins une des lentilles symétriques par rapport à l'axe de rotation dans les sous-ensembles optiques (a, b, c) est asphérique.

8. Objectif anamorphique anastigmate selon l'une des revendications 1 à 6, **caractérisé en ce que** tous les éléments déformants (3, 9, 12) sont des lentilles cylindriques asphériques.

9. Objectif anamorphique anastigmate selon l'une des revendications 1 à 3 ou 8, **caractérisé en ce que** le sous-ensemble à réfraction positive (a) se compose de deux lentilles sphériques positives (1,2), le sous-ensemble optique intermédiaire (b) se compose d'une lentille asphérique à réfraction négative dans une direction (3) et d'un triplet sphérique positif et le sous-ensemble optique du côté de l'image (c) se compose d'une succession de deux lentilles sphériques positives (7, 8), une lentille cylindrique sphérique (9), deux lentilles sphériques positives (10, 11) et une lentille cylindrique asphérique (12).

10. Objectif anamorphique anastigmate selon l'une des revendications 1 à 9, **caractérisé en ce que** l'objectif possède les paramètres suivants :

| N° de surface | Rayons | Distances | Indices de réfraction | Remarque |
|---|---|---|---|---|
| 1 | -333,30 | 2,75 | 1,595 | |
| 2 | -37,82 | 1,00 | air | |
| 3 | 58,15 | 2,46 | 1,755 | |
| 4 | 132,20 | 8,06 | air | |
| 5 | 0,00 | 1,50 | 1,850 | *surface cylindrique |
| 6 | 25,48 | 23,31 | air | ** surface cylindrique asphérique |
| 7 | 23,50 | 6,75 | 1,595 | |
| 8 | -27,48 | 0,00 | air | |
| 9 | -27,48 | 1,40 | 1,850 | |
| 10 | 22,45 | 4,23 | air | |
| 11 | 34,80 | 6,50 | 1,595 | |
| 12 | -32,70 | 42,14 | air | |
| 13 | 18,79 | 5,50 | 1,595 | |
| 14 | 15,28 | 2,12 | air | |
| 15 | 23,75 | 5,64 | 1,850 | |
| 16 | 48,24 | 1,00 | air | |
| 17 | 20,77 | 3,80 | 1,850 | ** surface cylindrique asphérique |
| 18 | 61,70 | 1,20 | air | *surface cylindrique |
| 19 | 27,46 | 1,50 | 1,850 | |
| 20 | 15,50 | 0,00 | air | |
| 21 | 15,50 | 2,50 | 1,595 | |
| 22 | 100,00 | 0,35 | air | ** surface cylindrique asphérique |
| 23 | 7,06 | 3,00 | 1,850 | *surface cylindrique |
| 24 | 27,21 | | | |

| N° de surface | K | A1 | A2 | A3 | A4 | A5 | A6 | A7 | A8 |
|---|---|---|---|---|---|---|---|---|---|
| 6 | 1,94E+00 | 3,00 E-05 | -7,40E-07 | -2,24E-07 | 5,45E-09 | 0,00E+00 | 0,00E+00 | 0,00E+00 | 0,00E+00 |
| 17 | 7,93E-01 | 6,13E-05 | -3,03E-06 | -4,47E-08 | 6,03E-10 | 0,00E+00 | 0,00E+00 | 0,00E+00 | 0,00E+00 |

| 23 | -2,57E-01 | -1,12E-03 | 1,05E-04 | -2,26E-06 | 2,06E-08 | 0,00E+00 | 0,00E+00 | 0,00E+00 | 0,00E+00 |

Fig. 1

Fig. 2

Fig. 3

Fig. 4

**Fig. 5**

**IN DER BESCHREIBUNG AUFGEFÜHRTE DOKUMENTE**

**In der Beschreibung aufgeführte Patentdokumente**

- DE 10060072
- US 3871748 A
- US 5671093 A
- DE 19650724 A1
- DE 19911862 C1
- DE 4104684 C1
- US 6995920 B2